# EUROPÄISCHE PATENTSCHRIFT

(11) **EP 0 902 514 B1**
(45) Veröffentlichungstag und Bekanntmachung des Hinweises auf die Patenterteilung: **07.11.2001**
(21) Anmeldenummer: 98114997.4
(22) Anmeldetag: 10.08.1998
(51) Int. Cl.: H02B 1/30

(54) **Gehäuseaufbau für elektrische oder elektronische Einbauten**
Cabinet construction for electric or electronic components
Construction d'armoire pour équipements électriques ou électroniques

(30) Priorität: 15.09.1997 DE 29716467 U
(43) Veröffentlichungstag der Anmeldung: 17.03.1999
(73) Patentinhaber: Rittal-Werk Rudolf Loh GmbH & Co. KG, 35745 Herborn (DE)
(72) Erfinder: Bach, Michael, 35768 Siegbach-Oberndorf (DE); Janot, Joachim, 73430 Aalen (DE)
(74) Vertreter: Fleck, Hermann-Josef, Dr.-Ing.

(56) Entgegenhaltungen:
- WO-A-96/34519
- DE-U- 29 716 467
- PATENT ABSTRACTS OF JAPAN vol. 97, no. 3, 31. März 1997 & JP 08 308033 A (TOSHIBA CORP.), 22. November 1996
- PATENT ABSTRACTS OF JAPAN vol. 96, no. 9, 30. September 1996 & JP 08 135294 A (KAWAMURA ELECTRIC INC.), 28. Mai 1996

## Beschreibung

Die Erfindung bezieht sich auf einen Gehäuseaufbau für elektrische oder elektronische Einbauten mit einem zwei Seitenwände, eine Rückwand, eine Frontabdeckung, ein Dach und einen Boden aufweisenden Außengehäuse und einem darin von dessen Wandteilen beabstandet untergebrachten Innengehäuse.

Ein Gehäuseaufbau dieser Art ist in der WO 96/34519 als bekannt ausgewiesen. Hierbei ist ein quaderförmiger Innenschrank allseitig beabstandet in einem spritzwasserdicht verschließbaren Außenschrank eingebaut. Der Innenschrank ist mit einer Kühleinrichtung versehen.

Der Erfindung liegt die Aufgabe zugrunde, einen Gehäuseaufbau der eingangs genannten Art bereitzustellen, der optisch ansprechend gestaltet ist, wobei sich gleichzeitig Vorteile hinsichtlich Witterungseinflüssen ergeben.

Diese Aufgabe wird mit den Merkmalen des Anspruches 1 gelöst. Hiernach ist also vorgesehen, daß das Dach des Außengehäuses nach oben konvex gewölbt, zu den Seitenwänden hin abfallend ausgebildet ist, daß die Frontabdeckung nach vorne konvex gewölbt ist, und daß der Übergang zwischen dem Dach und der Frontabdeckung mittels einer nach vorne abfallenden Schräge gebildet ist.

Das nach oben gewölbte Dach sowie die nach vorne gerichtete Schräge in Verbindung mit der nach außen gewölbten Frontabdeckung ergeben nicht nur ein optisch ansprechendes Bild, sondern vom Dachbereich wird auch Feuchtigkeit möglichst schnell abgeleitet, so daß dadurch verursachte negative Einflüsse verringert werden.

Für die Ableitung der Feuchtigkeit sind weiterhin die Maßnahmen günstig, daß die abnehmbare Frontabdeckung mit ihrem oberen Randbereich unter die Schräge setzbar und durch Einrasten in eine Verriegelung gehalten ist und daß der vordere Rand der Schräge mit der gewölbten Außenkontur der Frontabdeckung abschließt oder über diese mit geringem gleichbleibendem Abstand vorsteht, da insbesondere auch der obere Rand der Frontabdeckung abgedeckt und durch den vorderen Rand der Schräge eine Tropfkante gebildet ist, an deren vorderstem Bereich sich die Feuchtigkeit sammelt und abgeleitet wird. Durch die Verriegelung wird die Frontabdeckung sicher gehalten.

Dabei ist die Verriegelung geschützt und gegen unbefugten Zugriff sicher untergebracht, wenn vorgesehen ist, daß die Verriegelung zur Entriegelung durch mindestens eine seitliche Bohrung des Außengehäuses zugänglich ist.

Alternativ kann vorgesehen sein, daß die Frontabdeckung als Außentür ausgebildet ist und daß der vordere Abschnitt der Schräge ab der Vorderkante des Daches durch die Oberseite der Außentür gebildet ist.

Für die Klimatisierung mittels natürlicher Konvektion sind die Maßnahmen günstig, daß im oberen Endbereich der Seitenwände und/oder der Rückwand horizontale Lüftungsschlitze vorgesehen sind, die mit schräg nach unten und außen abfallenden Lamellen abgedeckt sind, und daß in dem Boden und/oder der Unterseite der Frontabdeckung Ausschnitte vorgesehen sind.

Eine günstige Befestigungsmöglichkeit zwischen Innengehäuse und Außengehäuse besteht darin, daß das Innengehäuse in dem Außengehäuse mittels auf seiner Rückseite und an der Innenseite der Rückwand des Außengehäuses angebrachter Verbindungsmittel befestigt ist, wobei die Verbindungsmittel vorteilhafterweise Abstandshülsen oder Gummipuffer aufweisen. Durch Gummipuffer wird gleichzeitig eine Schwingungsdämpfung erzielt.

Für die Zugänglichkeit des Inneren des Innengehäuses ist insbesondere in Verbindung mit der abnehmbaren Frontabdeckung die Maßnahme vorteilhaft, daß das Innengehäuse auf seiner Frontseite eine Tür mit einem Verschluß aufweist, und daß in dem Innengehäuse eine Montageplatte angeordnet ist, wobei Einbauten in dem Innengehäuse einfach an der Montageplatte angebracht werden können.

Eine große Montageplatte wird dadurch erzielt, daß die Montageplatte mindestens auf einer Seite abgewinkelt ist und sich entlang der Rückwandung des Innengehäuses und mindestens einer Seitenwand des Innengehäuses erstreckt.

Zur Klimatisierung bei geringem Platzbedarf ist die Maßnahme günstig, daß an der Oberseite des Innengehäuses in einem Durchbruch ein Wärmetauscher angeordnet ist.

Um auch bei stark schwankenden Außentemperaturen eine möglichst gleichbleibende Innentemperatur sicherzustellen, sind weiterhin die Maßnahmen vorteilhaft, daß in dem Innengehäuse mindestens ein Thermostat vorgesehen ist, und daß in ihm ferner eine Steuerung für die Klimatisierung und eine Heizung vorgesehen sind.

Eine stabile, insbesondere auch vandalensichere Anbringung des Gehäuseaufbaues wird dadurch erreicht, daß an der Rückwand des Außengehäuses eine Vorrichtung für eine Mastmontage oder eine Wandbefestigung angeordnet ist.

Die Erfindung wird nachfolgend anhand eines Ausführungsbeispiels unter Bezugnahme auf die Zeichnungen näher erläutert.

Die Fig. zeigt in den sechs verschiedenen Ansichten a) bis f) einen Gehäuseaufbau mit einem Außengehäuse 1 und einem darin mittels Verbindungsmitteln 4 beabstandet festgelegten Innengehäuse 2.

Das Außengehäuse 1 weist zwei Seitenwände 1.9, eine Rückwand 1.11, ein Dach 1.1, einen Boden 1.10 sowie eine Frontabdeckung 1.8 auf, wobei das Dach 1.1 nach oben zu den beiden Seiten hin abfallend konvex gewölbt und die Frontabdeckung 1.8 nach vorne gewölbt ausgebildet ist. Der Übergang zwischen dem Dach 1.1 und der Frontabdeckung 1.8 ist durch eine eingeschweißte Schräge 1.2 gebildet, die beispielsweise in einem Winkel von ca. 45° nach vorne abfällt, so daß die Schräge 1.2 eine linsenförmige Kontur aufweist, wie in Fig. a) zu sehen. Der vordere Abschnitt 1.3 der Schräge 1.2 überragt die Oberseite der Frontabdeckung 1.8 und schließt an seinem vorderen Rand mit der nach außen gewölbten Kontur der Frontabdeckung 1.8 ab. Der vordere Rand der Schräge 1.2 bildet somit eine Tropfkante, in deren zentralem Bereich sich abfließendes Wasser sammelt und abgeleitet wird, so daß dieses nicht in Übergänge der einzelnen Wandteile eindringen kann.

Wie aus Fig. e) ersichtlich, befindet sich im Boden 1.10 ein Ausschnitt 1.4, der gleichzeitig als Kabeleinführung dienen kann. Ein weiterer Ausschnitt 1.5 ist in der Unterseite der Frontabdeckung 1.8 vorgesehen. In den Seitenwänden 1.9 und der Rückwand 1.11 sind, wie die Fig. b), c) und d) zeigen, kiemenartige Lüftungsschlitze 1.6 ausgebildet, die mit schräg nach außen abfallenden Lamellen gegen eindringenden Niederschlag geschützt sind. Eine natürliche Konvektion und damit Abführung von durch Verlustleistung entstehender Wärme wird dadurch erzielt, daß Außenluft in die Ausschnitte 1.4, 1.5 eintritt und aus den Lüftungsschlitzen 1.6 austritt.

Die abnehmbare Frontabdeckung 1.8 ist mit ihrer Oberseite unter den vorderen Abschnitt 1.3 der Schräge 1.2 geschoben und mit einer Verriegelung 1.7 festgelegt; wobei im oberen Bereich der Frontplatte und der von dieser abgedeckten rahmenartigen Öffnung des Außengehäuses 1 z.B. hakenartige oder rastende Haltemittel und im unteren Bereich Schließmittel vorgesehen sein können. Die Verriegelung kann durch Betätigen von zwei innenliegenden Schließmitteln entriegelt werden, die durch eine seitliche Bohrung im unteren Bereich des Außengehäuses 1 zugänglich sind. Dadurch ist die Verriegelung nicht nur geschützt untergebracht, sondern auch gegen unbefugten Zugang gesichert.

Das Innengehäuse 2 ist quaderförmig ausgebildet und weist ebenfalls Seitenwände, eine Oberseite, eine Unterseite, eine Rückwandung 2.3 sowie eine vordere Abdeckung auf, die als Tür 2.1 ausgebildet ist. Bei abgenommener Frontabdeckung 1.8 ist die mittels eines Verschlusses 2.2 gesicherte Tür 2.1 des Innengehäuses 2 gut zugänglich und bedienbar. Als Verschluß 2.2 eignet sich z.B. ein Vorreiberverschluß.

Im Inneren des Innengehäuses 2 ist eine abgekantete Montageplatte 3 mittels Befestigungsmitteln 3.1 angebracht und erstreckt sich entlang der Rückwandung 2.3 und einer Seite, so daß eine große Montagefläche geboten wird.

In der Oberseite des Innengehäuses ist ein flacher Wärmetauscher, z.B. in Form eines Luft-Luft-Peltier-Wärmetauschers montiert. Die Montageplatte 3 trägt eine Heizung und seitlich zwei Thermostate, die zur Steuerung der Klimatisierungseinrichtung dienen. Ferner kann auch eine Stromversorgung für die Klimatisierungseinrichtung vorgesehen sein.

Der Gehäuseaufbau ist zur Mast- oder Wandbefestigung ausgebildet. Für die Mast- oder Wandbefestigung können gleichzeitig die Verbindungsmittel 4 ausgenutzt werden, mit denen die Verbindung zwischen dem Außengehäuse 1 und dem Innengehäuse 2 hergestellt ist und die auch von außen zugänglich sind. Zur Verstärkung ist mindestens eine Profilschiene vorgesehen.

Der Gehäuseaufbau kann in Alu-Zink-Blech, Edelstahl oder Aluminium gefertigt werden. Unter anderem können im Außeneinsatz auch Baugruppen untergebracht werden, die nicht bestimmungsgemäß für den Außeneinsatz entwickelt wurden, da der Gehäuseaufbau mit einem dicht abgeschlossenen Innengehäuse 2 eine hohe Schutzart und die Klimatisierungseinrichtung aufweisen kann.

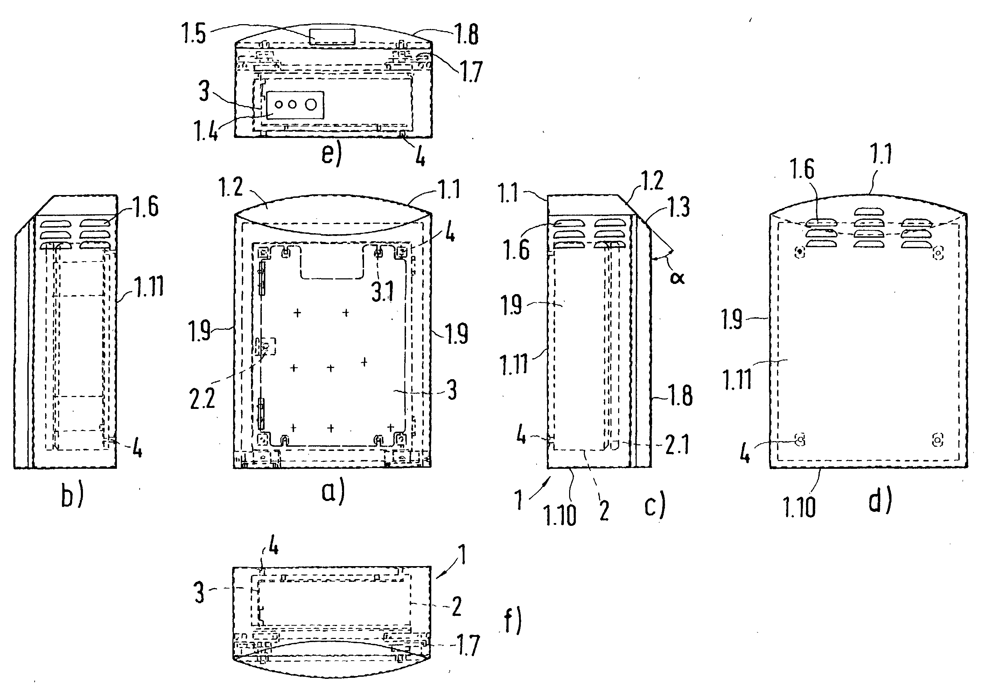

## Patentansprüche

1. Gehäuseaufbau für elektrische oder elektronische Einbauten mit einem zwei Seitenwände (1.9), eine Rückwand (1.11), eine Frontabdeckung (1.8), ein Dach und einen Boden (1.10) aufweisenden Außengehäuse (1) und einem darin von dessen Wandteilen beabstandet untergebrachten Innengehäuse (2),
**dadurch gekennzeichnet,**
**daß** das Dach (1.1) des Außengehäuses (1) nach oben konvex gewölbt, zu den Seitenwänden (1.9) hin abfallend ausgebildet ist,
**daß** die Frontabdeckung (1.8) nach vorne konvex gewölbt ist, und
**daß** der Übergang zwischen dem Dach (1.1) und der Frontabdeckung (1.8) mittels einer nach vorne abfallenden Schräge (1.2) gebildet ist.

2. Gehäuseaufbau nach Anspruch 1,
**dadurch gekennzeichnet,**
**daß** die abnehmbare Frontabdeckung (1.8) mit ihrem oberen Randbereich unter die Schräge (1.2) setzbar und durch Einrasten in eine Verriegelung (1.7) gehalten ist und
**daß** der vordere Rand der Schräge (1.2) mit der gewölbten Außenkontur der Frontabdeckung (1.8) abschließt oder über diese mit geringem gleichbleibendem Abstand vorsteht.

3. Gehäuseaufbau nach Anspruch 2,
**dadurch gekennzeichnet,**
**daß** die Verriegelung (1.7) zur Entriegelung durch mindestens eine seitliche Bohrung des Außengehäuses (1) zugänglich ist.

4. Gehäuseaufbau nach Anspruch 1,
**dadurch gekennzeichnet,**
**daß** die Frontabdeckung (1.8) als Außentür ausgebildet ist und
**daß** der vordere Abschnitt (1.3) der Schräge (1.2) ab der Vorderkante des Daches (1.1) durch die Oberseite der Außentür gebildet ist.

5. Gehäuseaufbau nach einem der Ansprüche 1 bis 4,
**dadurch gekennzeichnet,**
**daß** im oberen Endbereich der Seitenwände (1.9) und/oder der Rückwand (1.11) horizontale Lüftungsschlitze (1.6) vorgesehen sind, die mit schräg nach unten und außen abfallenden Lamellen abgedeckt sind, und
**daß** in dem Boden (1.10) und/oder der Unterseite der Frontabdeckung (1.8) Ausschnitte (1.4, 1.5) vorgesehen sind.

6. Gehäuseaufbau nach einem der Ansprüche 1 bis 5,
**dadurch gekennzeichnet,**
**daß** das Innengehäuse (2) in dem Außengehäuse (1) mittels auf seiner Rückseite und an der Innenseite der Rückwand (1.11) des Außengehäuses (1) angebrachter Verbindungsmittel (4) befestigt ist.

7. Gehäuseaufbau nach Anspruch 6,
**dadurch gekennzeichnet,**
**daß** die Verbindungsmittel (4) Abstandshülsen oder Gummipuffer aufweisen.

8. Gehäuseaufbau nach einem der Ansprüche 1 bis 7,
**dadurch gekennzeichnet,**
**daß** das Innengehäuse (2) auf seiner Frontseite eine Tür (2.1) mit einem Verschluß (12.2) aufweist, und
**daß** in dem Innengehäuse (2) eine Montageplatte (3) angeordnet ist.

9. Gehäuseaufbau nach Anspruch 8,
**dadurch gekennzeichnet,**
**daß** die Montageplatte (3) mindestens auf einer Seite abgewinkelt ist und sich entlang der Rückwandung (2.3) des Innengehäuses (2) und mindestens einer Seitenwand des Innengehäuses (2) erstreckt.

10. Gehäuseaufbau nach einem der Ansprüche 1 bis 9,
**dadurch gekennzeichnet,**
**daß** an der Oberseite des Innengehäuses (2) in einem Durchbruch ein Wärmetauscher angeordnet ist.

11. Gehäuseaufbau nach einem der Ansprüche 1 bis 10,
**dadurch gekennzeichnet,**
**daß** in dem Innengehäuse (2) mindestens ein Thermostat vorgesehen ist, und
**daß** in ihm ferner eine Steuerung für die Klimatisierung und eine Heizung vorgesehen sind.

12. Gehäuseaufbau nach einem der Ansprüche 1 bis 11,
**dadurch gekennzeichnet,**
**daß** an der Rückwand (1.11) des Außengehäuses (1.11) eine Vorrichtung für eine Mastmontage oder eine Wandbefestigung angeordnet ist.

## Claims

1. Housing assembly for electrical or electronic components, including an external housing (1), which has two lateral walls (1.9), a rear wall (1.11), a front cover (1.8), a top and a base (1.10), and an internal housing (2) which is accommodated in said external housing at a spacing from the wall members thereof, **characterised in that** the top (1.1) of the external housing (1) is configured so as to curve convexly upwardly and slope down towards the lateral walls (1.9), **in that** the front cover (1.8) is curved convexly forwardly, and **in that** the transition between the top (1.1) and the front cover (1.8) is formed by means of an inclination (1.2), which slopes down forwardly.

2. Housing assembly according to claim 1, **characterised in that** the removable front cover (1.8) can be placed with its upper edge region beneath the inclination (1.2) and is retained by engaging in a locking mechanism (1.7), and **in that** the front edge of the inclination (1.2) terminates with the curved external configuration of the front cover (1.8) or protrudes beyond said cover at a short, uniform distance therefrom.

3. Housing assembly according to claim 2, **characterised in that** the locking mechanism (1.7) is accessible through at least one lateral bore in the external housing (1) for unlocking purposes.

4. Housing assembly according to claim 1, **characterised in that** the front cover (1.8) is configured as an external door, and **in that** the front portion (1.3) of the inclination (1.2), starting from the front edge of the top (1.1), is formed by the upper side of the external door.

5. Housing assembly according to one of claims 1 to 4, **characterised in that** horizontal ventilation slots (1.6) are provided in the upper end region of the lateral walls (1.9) and/or of the rear wall (1.11) and are covered with discs, which slope inclinedly downwardly and outwardly, and **in that** cutaway portions (1.4, 1.5) are provided in the base (1.10) and/or in the underside of the front cover (1.8).

6. Housing assembly according to one of claims 1 to 5, **characterised in that** the internal housing (2) is secured in the external housing (1) by means of connecting means (4), which are situated on its rear side and on the inside of the rear wall (1.11) of the external housing (1).

7. Housing assembly according to claim 6, **characterised in that** the connecting means (4) have spacer sleeves or rubber buffers.

8. Housing assembly according to one of claims 1 to 7, **characterised in that** the internal housing (2) has, on its front side, a door (2.1) with a closure (2.2), and **in that** a mounting plate (3) is disposed in the internal housing (2).

9. Housing assembly according to claim 8, **characterised in that** the mounting plate (3) is bent-over on at least one side and extends along the rear panel (2.3) of the internal housing (2) and along at least one lateral wall of the internal housing (2).

10. Housing assembly according to one of claims 1 to 9, **characterised in that** a heat exchanger is disposed in an opening in the upper side of the internal housing (2).

11. Housing assembly according to one of claims 1 to 10,
**characterised in that** at least one thermostat is provided in the internal housing (2), and **in that** a control means for the air-conditioning and a heater are also provided in said housing.

12. Housing assembly according to one of claims 1 to 11,
**characterised in that** an apparatus for mounting a mast or for securing a wall is disposed on the rear wall (1.11) of the external housing (1).

## Revendications

1. Ensemble de boîtier pour des objets installés électriques ou électroniques, avec un boîtier extérieur (1) présentant deux parois latérales (1.9), une paroi arrière (1.11), une couverture frontale (1.8), un toit et un plancher (1.10) et un boîtier intérieur (2) monté dedans à écartement des parties de paroi de celui,
**caractérisé en ce**
**que** le plafond (1.1) du boîtier extérieur (1) est réalisé courbé de manière convexe vers le haut, incliné en direction des parois latérales (1.9),
**que** la couverture frontale (1.8) est courbée de manière convexe verse l'avant et
**que** le passage entre le toit (1.1) et la couverture frontale (1.8) est formé au moyen d'une pente (1.2) inclinée vers l'avant.

2. Ensemble de boîtier selon la revendication 1,
**caractérisé en ce**
**que** la couverture frontale (1.8) démontable peut être fixée par sa zone de bord supérieure sous la pente (1.2) et est maintenue par enclenchement dans un dispositif de verrouillage (1.7) et
**que** le bord avant de la pente (1.2) se raccorde au contour extérieur courbé de la couverture frontale (1.8) ou bien fait saillie, à faible écartement constant, par rapport à celle-ci.

3. Ensemble de boîtier selon la revendication 2,
**caractérisé en ce**
**que** le dispositif de verrouillage (17) est accessible, pour le déverrouillage, à travers au moins un alésage latéral du boîtier extérieur (1).

4. Ensemble de boîtier selon la revendication 1,
**caractérisé en ce**
**que** la couverture frontale (18) est réalisée sous forme de porte extérieure et
**que** la section avant (1.3) de la pente (1.2) est formée par la face supérieure de la porte extérieure écartée de l'arête avant du toit (1.1).

5. Ensemble de boîtier selon l'une des revendications 1 à 4,
**caractérisé en ce**
**que**, dans la zone d'extrémité supérieure des parois latérales (1.9) et/ou de la paroi arrière (1.11), sont formées des fentes d'aération (1.6) horizontales qui sont recouvertes par des lamelles inclinées vers le bas et l'extérieur et
**que** des découpures (1.4, 1.5) sont formées dans le plancher (1.10) et/ou la face inférieure de la couverture frontale (1.8).

6. Ensemble de boîtier selon l'une des revendications 1 à 5,
**caractérisé en ce**
**que** le boîtier intérieur (2) est fixé dans le boîtier extérieur (1) par l'intermédiaire de moyens de liaison (4) rapportés sur sa face arrière et à la face intérieure de la paroi arrière (1.11) du boîtier extérieur (1).

7. Ensemble de boîtier selon la revendication 6,
**caractérisé en ce**
**que** les moyens de liaison (4) présentent des douilles d'écartement ou des amortisseurs en caoutchouc.

8. Ensemble de boîtier selon l'une des revendications 1 à 7,
**caractérisé en ce**
**que** le boîtier intérieur (2) présente, sur sa face frontale, une porte (2.1) avec un verrou (2.2) et
**qu'**une plaque de montage (3) est disposée dans le boîtier intérieur (2).

9. Ensemble de boîtier selon la revendication 8,
**caractérisé en ce**
**que** la plaque de montage (3) est repliée sur au moins un côté et s'étend le long de la paroi arrière (2.3) du boîtier intérieur (2) et au moins une paroi latérale du boîtier intérieur (2).

10. Ensemble de boîtier selon l'une des revendications 1 à 9,
**caractérisé en ce**
**qu'**un échangeur de chaleur est monté sur la face supérieure du boîtier intérieur (2) dans un ajour.

11. Ensemble de boîtier selon l'une des revendications 1 à 10,
**caractérisé en ce**
**qu'**au moins un thermostat est disposé dans le boîtier intérieur (2) et
**qu'**en outre une commande pour la climatisation et un chauffage sont disposés dedans.

12. Ensemble de boîtier selon l'une des revendications 1 à 11,
**caractérisé en ce**
**qu'**un dispositif pour un montage sur mât ou une fixation de paroi est disposé sur la paroi arrière (1.11) du boîtier extérieur (1).
